# EUROPEAN PATENT SPECIFICATION

(11) **EP 2 282 571 B1**
(45) Date of publication and mention of the grant of the patent: **03.07.2013**
(21) Application number: 09754718.6
(22) Date of filing: 27.05.2009
(51) Int. Cl.: H04W 24/02, H04W 84/10

(54) **METHOD OF ACCOMMODATING WIRELESS BASE STATIONS AND NETWORK APPARATUS**
VERFAHREN ZUR EINRICHTUNG DRAHTLOSER BASISSTATIONEN UND NETZWERKGERÄT
PROCÉDÉ D'INSTALLATION DE STATIONS DE BASE SANS FIL ET APPAREIL DE RÉSEAU

(30) Priority: 27.05.2008 JP 2008137972
(43) Date of publication of application: 09.02.2011
(73) Proprietor: NTT DOCOMO, INC., Chiyoda-ku Tokyo 100-6150 (JP)
(72) Inventor: HOSONO, Hiroyuki, Chiyoda-ku, Tokyo 100-6150 (JP); MASUDA, Masafumi, Chiyoda-ku, Tokyo 100-6150 (JP); AOYAGI, Kenichiro, Chiyoda-ku, Tokyo 100-6150 (JP)
(74) Representative: HOFFMANN EITLE
(86) International application number: PCT/JP2009/059657
(87) International publication number: WO 2009/145210

(56) References cited:
- EP-A1- 1 775 976
- WO-A1-2007/040451
- JP-A- 2007 329 758
- US-A1- 2005 148 368
- US-A1- 2006 211 431
- MENDE W ET AL: "Mobile radio network management supported by a planning tool", NETWORK OPERATIONS AND MANAGEMENT SYMPOSIUM, 1998. NOMS 98., IEEE NEW ORLEANS, LA, USA 15-20 FEB. 1998, NEW YORK, NY, USA,IEEE, US, vol. 2, 15 February 1998 (1998-02-15), pages 483-492, XP010267423, DOI: 10.1109/NOMS.1998.654449 ISBN: 978-0-7803-4351-1

## Description

The present invention relates to a radio base station accommodation method and a network apparatus which allow a radio base station to be accommodated in a mobile communication system.

### Background Art

In a general mobile communication system, a radio base station for public communication is configured to be regularly operated and managed by a network operator after the start of operation so as to respond to connection requests made from mobile stations at random.

For example, the work of starting operations of the radio base station for public communication is carried out by the network operator as follows.

(1) After installing a radio base station and performing some operations including wire connection, the network operator switches on the radio base station to establish a communication link between the radio base station and an upper node (for example, a radio network controller).

(2) The network operator sets the radio network controller to have parameter values to be used in the radio base station for public communication through an input via a network or through a manual direct input.

However, radio base stations installed in small-scale areas such as in houses (which are called home base stations or Home eNBs) are intended to be set by the users themselves. The number of home base stations is therefore expected to be very large. This requires a lot of work by the network operator in setting the parameter values.

One of the known solutions for such a problem is a method of causing a home base station to implement a function to recognize a surrounding environment and automatically setting the parameter values based on the result of the recognition of the surrounding environment by the home base station.

In this method, the home base station receives and decodes downlink control signals transmitted by neighbor radio base stations to detect downlink scrambling codes already used by the neighbor radio base stations. A radio network controller automatically determines a downlink scrambling code to be used by the home base station based on the results of detection.

### Summary of the Invention

However, the above method has the following problem. Specifically, the parameter values (configuration data of the radio network controller) determined depending on the installation location of the home base station, such as a neighbor list, need to be dynamically generated by the radio network controller or home base station. This requires significant modification of the radio network controller or home base station.

For example, the home base station has a problem that implementation of the aforementioned method requires significant modification for hardware including a receiver and a filter used for specifying the downlink control signal transmitted from the neighbor base stations.

US 2006/0211431 A1 relates to a system and method for determining the location of a base transceiver station (BTS). A personal BTS can determine its location using information transmitted by neighboring BTSs or from mobile station transmissions to neighboring BTSs. If the personal BTS cannot determine its location using information from neoighboring BTSs or from mobile station transmissions, the personal BTS can contact a cellular network operator to request that a technician come out to verify the location.

EP 1 775 976 A1 relates to a method for enabling a first base station to be included within a wireless cellular network. The first base station transfers a first message comprising at least an identifier of the first base station and information representative of the location of the first base station to the server, receives from the server a second message comprising an identifier of a second base station which manages a cell which is neighbor of a cell of the first base station and a certificate proving that the first base station is authorized to communicate with the second base station, transfers to the second base station a third message comprising the certificate in order to establish a communication with the second base station.

US 2005/0148368 A1 relates to a system and method for automatically configuring and integrating a radio base station into an existing wireless cellular communication network with full bi-directional roaming and handover capability. The radio base station in the mobile communication network collects information about the network and exchanges data with a configuration device. The configuration device configures and integrates the base station into the network by defining configuration parameter settings that allow full interoperation of the base station with the network, with regards to roaming and handover in particular.

The present invention has been made in the light of the aforementioned problems, and an object of the present invention is to provide a radio base station accommodation method and a network apparatus which allow a home base station to start operation using proper parameter values determined depending on the installation location of the home base station without significant modification of the radio network controller or home base station.

A first aspect of the present invention is summarized as a radio base station accommodation method for accommodating a radio base station in a mobile communication system, the method comprise step A of a network apparatus managing a parameter set including at least a parameter value determined for each group area, which group areas are obtained by dividing a cover area, step B of the network apparatus selecting one of the parameter sets for the group areas each including a installation location of the radio base station and assigning the selected parameter set to the radio base station, when an installation location of the radio base station is determined, and step C of the radio base station operating using the parameter value included in the assigned parameter set after being connected to the network apparatus.

In the first aspect, wherein each of the parameter sets associates the at least a parameter value with a base station identifier and address information, and in the step B, the network apparatus notifies the radio base station of the base station identifier included in the parameter set assigned to the radio base station, the method further comprising the steps of the radio base station acquiring the address information associated with the base station identifier from a predetermined server, and the radio base station sending a connection request including the acquired address information to the network apparatus to acquire the parameter value associated with the address information.

In the first aspect, wherein each of the parameter sets associates with the at least a parameter value with a base station identifier, the method further comprising the steps of the network apparatus notifying the radio base station of the base station identifier included in the parameter set assigned to the radio base station, and the radio base station sending a connection request including the notified base station identifier to the network apparatus to acquire the parameter value associated with the base station identifier.

A second aspect of the present invention is summarized as a network apparatus used in a radio base station accommodation method for accommodating a radio base station in a mobile communication system, the apparatus comprise a management unit configured to manage a parameter set including at least a parameter value determined for each group area, which group areas are obtained by dividing a cover area, and an assignment unit configured to select one of the parameter sets for the group areas each including an installation location of the radio base station and assign the selected parameter set when the installation location of the radio base station and assign the selected parameter set when the installation location of the radio base station is determined.

[0016] In the second aspect, wherein the management unit associates the at least a parameter value with a base station identifier and address information in each of the parameter sets, and the assignment unit is configured to notify the radio base station of the base station identifier included in the parameter set assigned to the radio base station, the network apparatus further comprising a connection request receiving unit configured to notify the radio base station of the parameter value associated with the address information included in a connection request when receiving the connection request from the radio base station.

In the second aspect, wherein the management unit associates the at least a parameter value with a base station identifier in each of the parameter sets, and the assignment unit is configured to notify the radio base station of the base station identifier included in the parameter set assigned to the radio base station, the apparatus further comprising a connection request receiving unit configured to notify the radio base station of the parameter value associated with the base station identifier included in a connection request when receiving the connection request from the radio base station.

As described above, according to the present invention, it is possible to provide a radio base station accommodation method and a network apparatus which allow a home base station to start operation using proper parameter values determined depending on the installation location of the home base station without significant modification of the radio network controller or home base station.

### Brief Description of the Drawings

FIG. 1 is an entire block diagram of a mobile communication system according to a first embodiment of the present invention.
FIG. 2 is a functional block diagram of an operator apparatus according to the first embodiment of the present invention.
FIG. 3 is a diagram showing an example of configuration data generated by the operator apparatus according to the first embodiment of the present invention.
FIG. 4 is a functional block diagram of a radio network controller according to the first embodiment of the present invention.
FIG. 5 is a functional block diagram of a radio base station according to the first embodiment of the present invention.
FIG. 6 is a flowchart illustrating a method of accommodating a radio base station according to the first embodiment of the present invention.
FIG. 7 is a diagram for explaining a step of updating the configuration data and a step of assigning a base station identifier in the method of accommodating a radio base station according to the first embodiment of the present invention.
FIG. 8 is a diagram for explaining a step of specifying a group area accommodating a radio base station which is to be accommodated in the method of accommodating a radio base station according to the first embodiment of the present invention.
FIG. 9 is a diagram for explaining a step of acquiring an IP address and a step of distributing parameter values in the method of accommodating a radio base station according to the first embodiment of the present invention.
FIG. 10 is an entire block diagram of a mobile communication system according to Modification 1 of the present invention.
FIG. 11 is an entire block diagram of a mobile communication system according to Modification 2 of the present invention.

### Best Modes for Carrying Out the Invention

### (Configuration of Mobile Communication System according to First Embodiment of Present Invention)

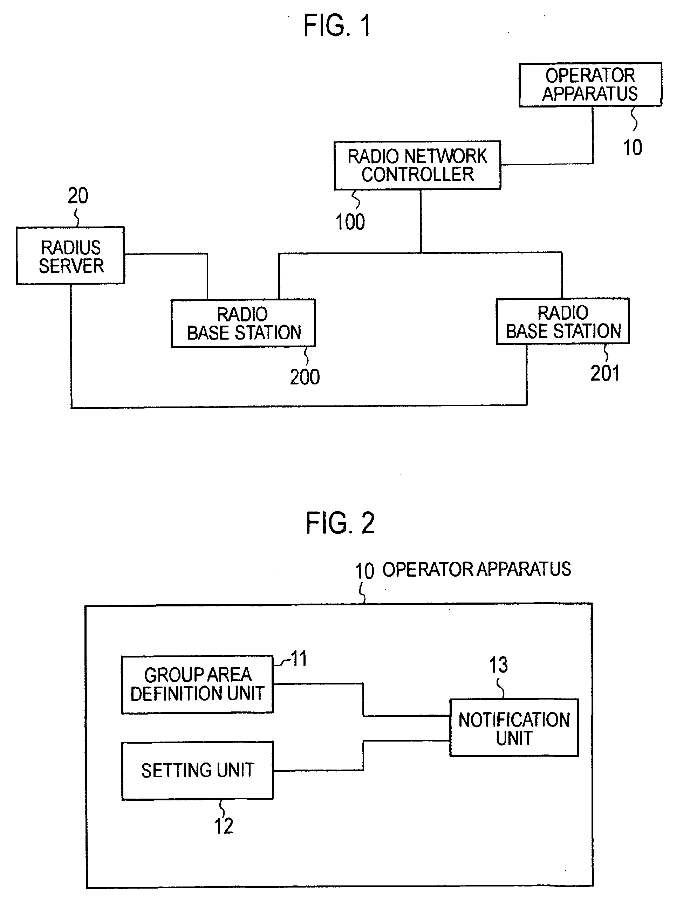

A description is given to a mobile communication system according to a first embodiment of the present invention with reference to FIGS. 1 to 5.

As shown in FIG. 1, the mobile communication system according to the embodiment includes an operator apparatus 10, a radio network controller (RNC) 100, a RADIUS server (a predetermined server) 20, and radio base stations (Node Bs) 200 and 201.

The radio base stations 200 and 201 are accommodated in the radio network controller 100 and are home base stations installed in small-scale areas such as houses. The radio network controller 100 manages configuration data 300 described later.

As shown in FIG. 2, the operator apparatus 10 includes a group area definition unit 11, a setting unit 12, and a notification unit 13. The operator apparatus 10 may be a device integrated with the radio network controller 100.

The group area definition unit 11 is configured to define each group area based on positional information (latitude and longitude information or the like) inputted by a network operator.

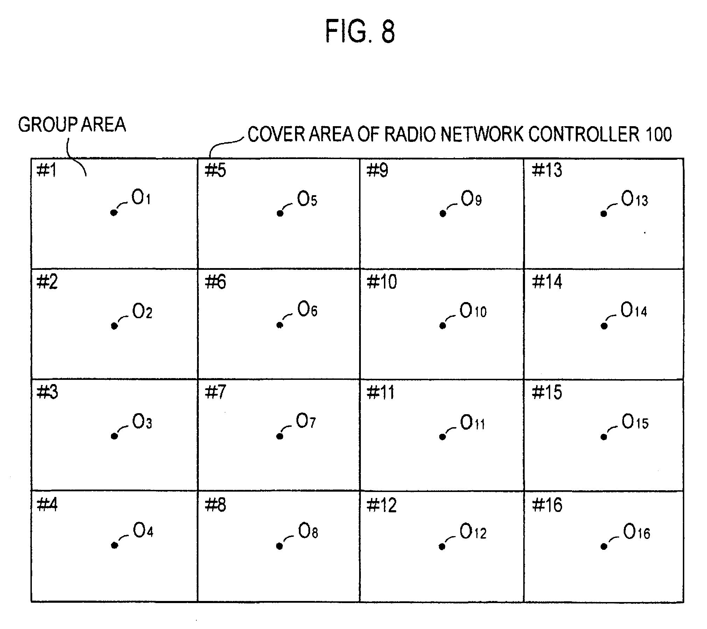

The group areas are obtained by dividing a cover area of the radio network controller 100 into one or a plurality of areas (see FIG. 8).

For example, when the group areas are circular, the group areas are defined by positional information of the center thereof and the radius. When the group areas are rectangular (square), the group areas are defined by positional information of two diagonally opposite vertices.

The setting unit 12 is configured to set the configuration data 300 of each radio network controller 100 based on the input from the network operator.

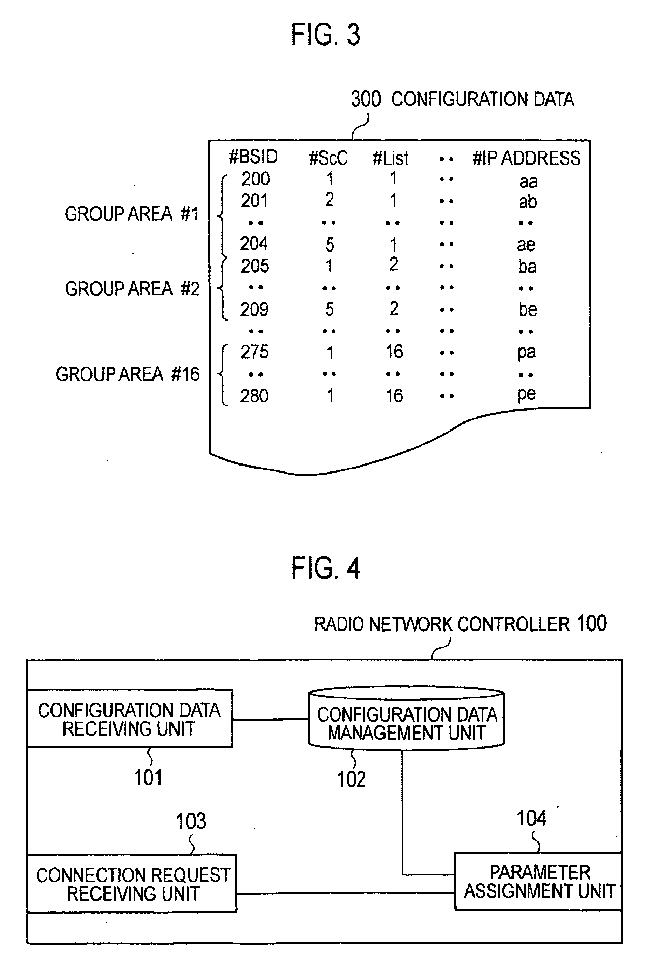

As shown in FIG. 3, the configuration data 300 is provided for each group area and contains a plurality of parameter sets. Each parameter set includes a base station identifier BSID and an IP address (address information) associated with at least a parameter value (for example, a spreading code ScC, a neighbor list List, or the like).

Herein, the spreading code ScC, neighbor list List, and the like are parameter values determined depending on the installation location of the radio base stations 200 and 201. However, the other parameter values are not necessarily dependent on the installation location of the radio base station 200, 201.

The notification unit 13 is configured to notify each radio network controller 100 of the configuration data 300 set for the radio network controller 100.

As shown in FIG. 4, each radio network controller 100, which is a network apparatus, includes a configuration data receiving unit 101, a configuration data management unit 102, a connection request receiving unit 103, and a parameter assignment unit 104.

The configuration data receiving unit 101 is configured to receive the configuration data notified by the operator apparatus 10.

The configuration data management unit 102 is configured to manage the configuration data received by the configuration data receiving unit 101. Specifically, as shown in FIG. 3, the configuration data management unit 102 is configured to manage, for each group area, a parameter set including at least a parameter value, or a parameter set including the base station identifier BSID and the IP address associated with the parameter values (the spreading code ScC, neighbor list List, and the like).

The parameter assignment unit 104 is configured to select one of the parameter sets for the group area including the installation location of the radio base station 200, 201 and assign the selected parameter set to the radio base station 200, 201 when the installation location of the radio base station 200, 201 is determined.

Herein, the parameter assignment unit 14 is configured to notify the radio base station 200, 201 of the base station identifier BSID included in the parameter set assigned to the radio base station 200, 201.

The connection request receiving unit 103 is configured to receive a connection request transmitted from the radio base station 200, 201.

For example, the connection request receiving unit 103 notifies the radio base station 200, 201 of the parameter values associated with the IP address (address information) included in the received connection request when receiving a connection request from the radio base station 200, 201. Herein, the IP address may be included as a source address of the packet for notification of the connection request.

Moreover, the connection request receiving unit 103 may be configured to notify the radio base station 200, 201 of the parameter values associated with the base station identifier BSID included in the received connection request when receiving the connection request from the radio base station 200, 201.

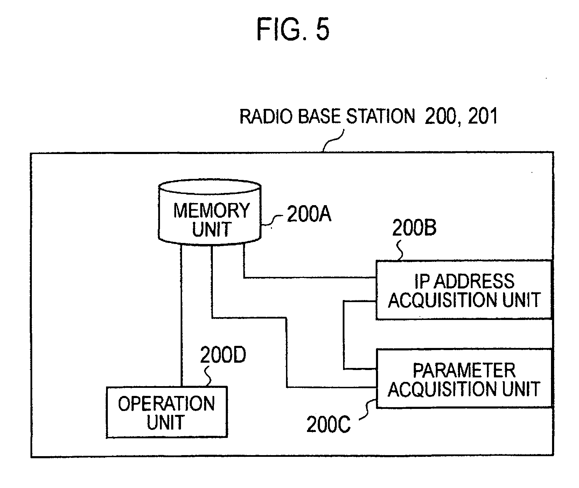

As shown in FIG. 5, the radio base station 200, 201 includes a memory unit 200A, an IP address acquisition unit 200B, a parameter acquisition unit 200C, and an operation unit 200D.

The memory unit 200A is configured to store the base station identifier BSID, parameter values (the spreading code ScC, neighbor list List, and the like), IP address, and the like.

The IP address acquisition unit 200B is configured to acquire the address information associated with the base station identifier BSID assigned to the radio base station 200, 201 from the RADIUS server (predetermined server) and store the acquired address information in the memory unit 200A.

The parameter acquisition unit 200C is configured to acquire the base station identifier assigned to the radio base station 200, 201 and the acquired radio station identifier in the memory unit 200A.

The parameter acquisition unit 200C may be configured to acquire the base station identifier BSID received from the radio network controller 100 through a network or may be configured to acquire the base station identifier BSID which is assigned by the radio network controller 100 and manually inputted by the network operator or the like.

The parameter acquisition unit 200C is configured to acquire the parameter values associated with the IP address by sending a connection request including the IP address acquired by the IP address acquisition unit 200B to the radio network controller 100.

Alternatively, the parameter acquisition unit 200C is configured to acquire the parameter values and IP address associated with the base station identifier BSID by sending a connection request including the base station identifier BSID acquired by the parameter acquisition unit 200C to the radio network controller 100.

The operation unit 200D is configured to operate using the parameter values (the spreading code ScC, neighbor list List, or and the like) included in the assigned parameter set after being connected to the radio network controller 100.

### (Operation of Mobile Communication System according to First Embodiment of the Present Invention)

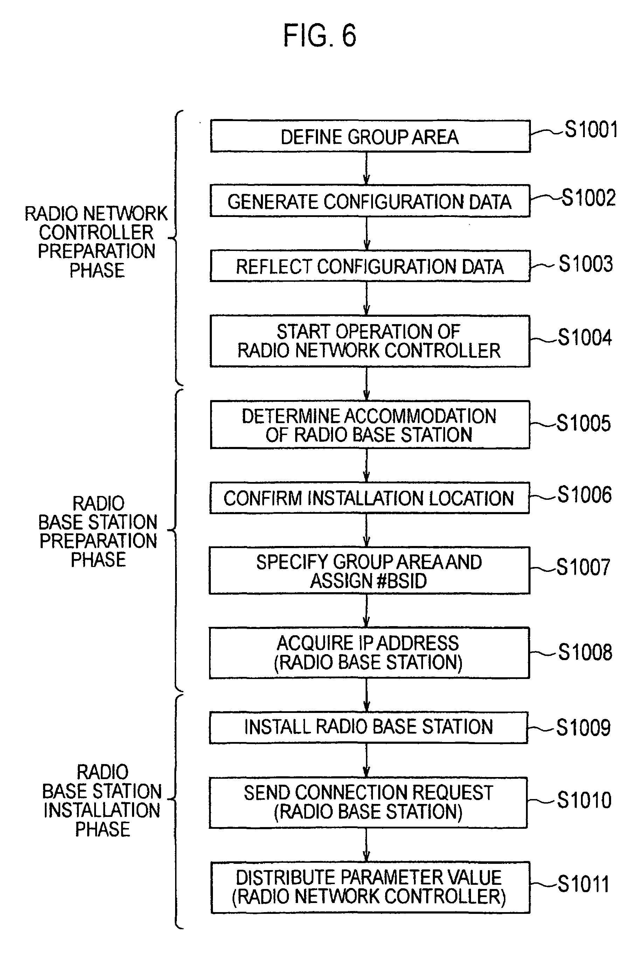

With reference to FIGS. 6 to 9, description is given of the operation of the mobile communication system according to the first embodiment of the present invention and specifically of the operation of accommodating the radio base station 200 in the radio network controller 100.

As shown in FIG. 6, in step S1001, using the operator apparatus 10, the network operator (a maintenance person) divides a previously determined cover area of the radio network controller 100 into one or a plurality of group areas to define the group areas. FIG. 8 shows an example where the cover area of the radio network controller 100 is divided into 16 group areas, for example.

Herein, the network operator (maintainer) may previously define the number of group areas and the range of each group area based on the estimated number and locations of radio base stations to be installed in each group area so that the difference between the central position of each group area and the installation location of each radio base stations is small.

In step S1002, for each group area defined in the step S1001, the network operator (maintenance person) generates configuration data by using the operator apparatus 10 in consideration of the number of the radio base stations to be installed. Here, the configuration data includes base station identifiers BSID to be assigned to newly installed radio base stations and the parameter values (parameters for connection) determined depending on the installation locations of the radio base stations.

Herein, as for the parameter values determined depending on the installation location of each radio base station, or the parameter values (for example, the spreading code ScC) which need to be set different from those of neighbor radio base stations in the configuration data, the network operator (maintenance person) sets different values in the same group area. For example, such a parameter value may be configured to repeatedly take a same value in the different group areas.

On the other hand, as for the parameter values correlating with those of the neighbor radio base stations (for example, the neighbor list List), the network operator (maintenance person) sets different values for the different group areas using the operator apparatus 10. For example, such a parameter value may be set to a same value in the same group area.

An example of the configuration data set in such a manner is shown in FIG. 3. In the example of FIG. 3, using the operator apparatus 10, the network operator (maintenance person) defines five base station identifiers for each of group areas #1 to #16, for example. The spreading code ScC is set to "1" through "5" for the individual base station identifiers so as to take different values in the same group area. The neighbor list List is set to "1" through "16" so as to take a same value in each group area.

It is not necessary that the number of parameter sets defined in each group area is the same (five for each), unlike in FIG. 3. For example, when it is expected that more radio base stations are installed in a particular group area than in the other group areas, the number of parameter sets defined in the particular group may be larger than that of the other group areas.

In other words, the network operator (maintenance person) may set the same number of aforementioned parameter sets as the number of radio base stations which are estimated to be accommodated in each group area.

As show in FIG. 8, the network operator (maintenance person) may set the parameter values dependent on the installation locations of the radio base stations for each group area assuming that each radio base station is installed at a central position O of each group area.

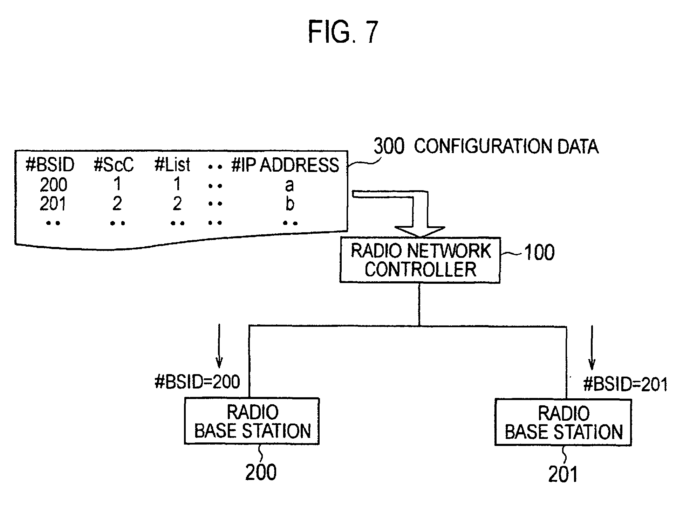

In step S1003, the network operator (maintenance person) sets the configuration data 300 generated in the step S1002 for the radio network controller 100 using the operator apparatus 10 (see FIG. 7).

In step S1004, the network operator (maintenance person) starts the operation of the radio network controller 100.

Thereafter, when the radio base station 200 is decided to be accommodated in the radio network controller 100 in step S1005, the network operator (maintenance person) confirms the installation location of the radio base station 200 with an owner (a user) of the radio base station 200.

In step S1007, the network operator (maintenance person) inputs the installation location of the radio base station 200 into the radio network controller 100. The radio network controller 100 specifies the group area including the installation location of the radio base station 200, selects one of the parameter sets for the specified group area, and assigns the selected parameter set to the radio base station 200.

To be specific, the radio station controller 100 assigns an unused parameter set (including the base station identifier BSID, IP address, spreading code ScC, neighbor list List, and the like) of the specified group area to the radio base station 200.

As shown in FIG. 7, the radio network controller 100 then notifies the radio base station 200 of the base station identifier BSID included in the parameter set assigned to the radio base station 200.

Herein, the network operator (maintenance person), a clerk of the shop selling the radio base station 200, or the like may set the base station identifier BSID included in the parameter set assigned to the radio base station 200 by the radio network controller 100 to the memory unit 200A within the radio base station 200.

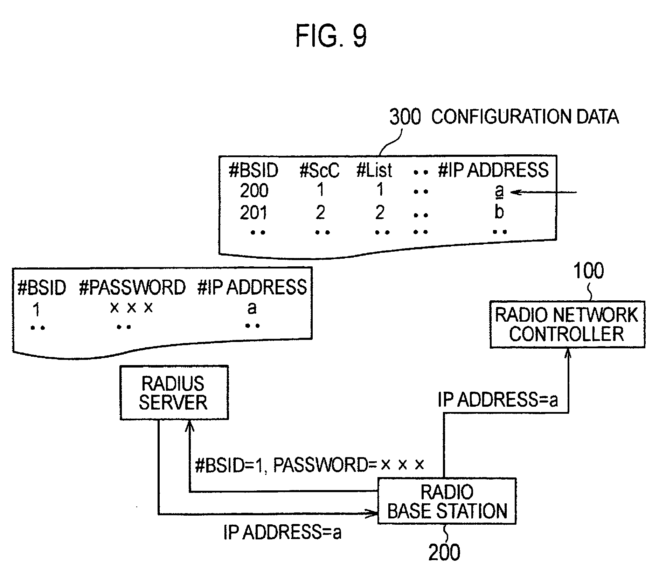

As shown in FIG. 9, in step S1008, in response to an instruction from the network operator (maintenance person), a clerk of the shop selling the radio base station 200, an owner (a user) of the radio base station 200, or the like, the radio base station 200 acquires the IP address associated with the base station identifier BSID from the RADIUS server and sets the acquired IP address to the memory unit 200A within the radio base station 200.

As shown in FIG. 9, in step S1009, the radio base station 200 sends a connection request to the radio network controller 100 when being installed at the aforementioned installation location.

As shown in FIG. 9, in step S1010, the radio network controller 100 specifies the parameter values (the spreading code ScC, neighbor list List, and the like) associated with the IP address of the radio base station 200 included in a header (the source address) of the IP packet for notification of the received connection request and distributes the specified parameter values to the radio base station 200.

The radio network controller 100 may specify the parameter values (the spreading code ScC, neighbor list List, and the like) associated with the base station identifier included in the received connection request and distribute the specified parameter values to the radio base station 200.

The radio base station 200 then starts operating using the parameter values distributed by the radio network controller 100.

The network operator (maintenance person) properly sets the number of divided group areas and the number of radio base stations which can be accommodated in each of the group areas based on the estimated number of radio base stations to be installed and installation locations. This can realize both the accuracy of the parameter values set for each group area (the difference between each parameter value previously set and the parameter value obtained based on the real installation location of the radio base station) and the flexibility in accommodation of the radio group stations (the difference between the number of parameter sets previously set for each group area and the number of radio base stations actually installed in the group area).

### (Operation and Effect of Mobile Communication System according to First Embodiment of the Present Invention)

According to the mobile communication system according to the first embodiment of the present invention, it is possible to easily accommodate the radio base stations while reducing the time taken to create and reflect the configuration data at each time of accommodating the radio base stations.

### (Modification 1)

The above embodiment is described using the W-CDMA mobile communication system as an example. However, the present invention is not limited to such a mobile communication system but can be applied to a LTE (long term evolution) mobile communication system, for example.

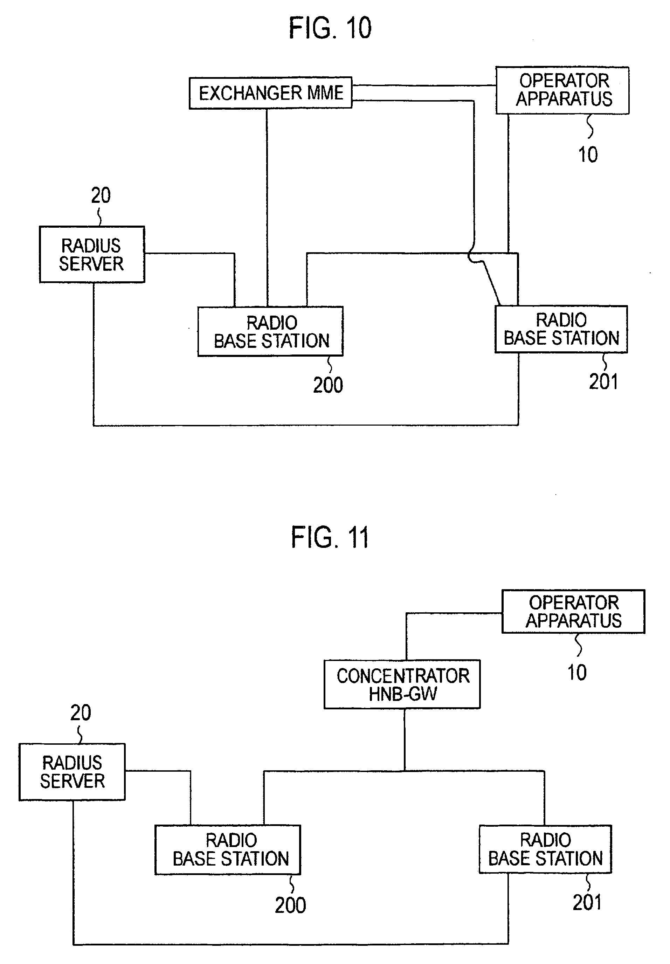

With reference to FIG. 10, a description is given of a mobile communication system according to Modification 1. The mobile communication system according to Modification 1 is described below based on the mobile communication system according to the first embodiment.

As shown in FIG. 10, the mobile communicate system according to Modification, which is an LTE mobile communication system, includes the operator apparatus 10, the RADIUS server (the predetermined server) 20, and radio base stations (eNB) 200 and 201.

In the mobile communication system according to Modification 1, the function of the radio network controller (RNC) 100 shown in FIG. 4 is mounted on the radio base station 200, 201 or an exchange station MME. In other words, in this modification, the radio base station 200, 201 or exchange station MME is configured to play a role of the aforementioned network apparatus.

### (Modification 2)

A description is given to a mobile communication system according to Modification 2 with reference to FIG. 11. The mobile communication system according to Modification 2 is described below based on the mobile communication system according to the first embodiment.

As shown in FIG. 11, the mobile communication system according to Modification 2, which is a WCDMA or an LTE mobile communication system, includes the operator apparatus 10, the RADIUS server (the predetermined server) 20, a concentrator HNB-GW, and the radio base stations (Node Bs or eNBs) 200 and 201.

In the mobile communication system according to Modification 2, the function of the radio network controller (RNC) 100 shown in FIG. 4 is mounted on the concentrator HNB-GW. In other words, in this modification, the concentrator HNB-GW is configured to play a role of the aforementioned network apparatus.
Note that operation of the above described the radio base station 200, 201, exchange station MME 1 and the concentrator HNB-GW may be implemented by means of hardware, a software module executed by a processor, or a combination of both.
The software module may be provided in any type of storage medium such as an RAM (Random Access Memory), a flash memory, a ROM (Read Only Memory), an EPROM (Erasable Programmable ROM), an EEPROM (Electronically Erasable and Programmable ROM), a register, a hard disk, a removable disk, or a CD-ROM.
The storage medium is connected to the processor so that the processor can read and write information from and to the storage medium. Also, the storage medium may be integrated into the processor. Also, the storage medium and the processor may be provided in an ASPIC. The ASIC may be provided in the radio base station 200, 201, exchange station MME 1 and the concentrator HNB-GW. Also, the storage medium and the processor may be provided in the radio base station 200, 201, exchange station MME 1 and the concentrator HNB-GW as a discrete component.
Hereinabove, the present invention has been described in detail using the above embodiment; however, it is apparent to those skilled in the art that the present invention as claimed is not limited to the embodiment described herein.

## Claims

1. A radio base station accommodation method for accommodating a radio base station (200, 201) in a mobile communication system, the method comprising:
step A of a network apparatus (100) managing a parameter set including at least a parameter value determined for each group area which group areas are obtained by dividing a cover area;
step B of the network apparatus (100) selecting one of the parameter sets for the group areas each including a installation location of the radio base station (200, 201) and assigning the selected parameter set to the radio base station (200, 201), when an installation location of the radio base station (200, 201) is determined; and
step C of the radio base station (200, 201) operating using the parameter value included in the assigned parameter set after being connected to the network apparatus (100).

2. The method of accommodating a radio base station (200, 201) according to claim 1, wherein
each of the parameter sets associates the at least a parameter value with a base station identifier and address information, and
in the step B, the network apparatus (100) notifies the radio base station (200, 201) of the base station identifier included in the parameter set assigned to the radio base station (200, 201), the method further comprising the steps of:
the radio base station (200, 201) acquiring the address information associated with the base station identifier from a predetermined server (20); and
the radio base station (200, 201) sending a connection request including the acquired address information to the network apparatus (100) to acquire the parameter value associated with the address information.

3. The method of accommodating a radio base station (200, 201) according to claim 1, wherein
each of the parameter sets associates with the at least a parameter value with a base station identifier, the method further comprising the steps of:
the network apparatus notifying the radio base station (200, 201) of the base station identifier included in the parameter set assigned to the radio base station (200, 201), and
the radio base station (200, 201) sending a connection request including the notified base station identifier to the network apparatus (100) to acquire the parameter value associated with the base station identifier.

4. A network apparatus (100) used in a radio base station accommodation method for accommodating a radio base station (200, 201) in a mobile communication system, the apparatus (100) comprising:
a management unit (102) configured to manage a parameter set including at least a parameter value determined for each group area which group areas are obtained by dividing a cover area;
and an assignment unit (104) configured to select one of the parameter sets for the group areas each including an installation location of the radio base station (200, 201) and assign the selected parameter set when the installation location of the radio base station (200, 201) is determined.

5. The network apparatus (100) according to claim 4, wherein the management unit (102) associates the at least a parameter value with a base station identifier and address information in each of the parameter sets, and
the assignment unit (104) is configured to notify the radio base station (200, 201) of the base station identifier included in the parameter set assigned to the radio base station (200, 201), the network apparatus (100) further comprising a connection request receiving unit (103) configured to notify the radio base station (200, 201) of the parameter value associated with the address information included in a connection request when receiving the connection request from the radio base station (200, 201).

6. The network apparatus (100) according to claim 4, wherein the management unit (102) associates the at least a parameter value with a base station identifier in each of the parameter sets, and the assignment unit (104) is configured to notify the radio base station (200, 201) of the base station identifier included in the parameter set assigned to the radio base station (200, 201), the apparatus (100) further comprising a connection request receiving unit (103) configured to notify the radio base station (200, 201) of the parameter value associated with the base station identifier included in a connection request when receiving the connection request from the radio base station (200, 201).

## Patentansprüche

1. Funkbasisstationseinrichtungsverfahren zum Einrichten einer Funkbasisstation (200, 201) in einem Mobilkommunikationssystem, wobei das Verfahren umfasst:
Schritt A einer Netzvorrichtung (100) des Verwaltens eines Parametersatzes, beinhaltend mindestens einen Parameterwert, bestimmt für jeden Gruppenbereich, welche Gruppenbereiche erlangt werden durch Teilen eines Abdeckungsbereichs;
Schritt B der Netzvorrichtung (100) des Auswählens eines der Parametersätze für die Gruppenbereiche, jeweils beinhaltend einen Installationsort der Funkbasisstation (200, 201) und Zuweisen des ausgewählten Parametersatzes zu der Funkbasisstation (200, 201), wenn ein Installationsort der Funkbasisstation (200, 201) bestimmt ist; und
Schritt C der Funkbasisstation (200, 201) des Betreibens unter Verwendung des Parameterwerts, beinhaltet in dem zugewiesenen Parametersatz, nach dem Verbinden zu der Netzvorrichtung (100).

2. Verfahren des Einrichtens einer Funkbasisstation (200, 201) nach Anspruch 1, wobei
jeder der Parametersätze den mindestens einen Parameterwert mit einem Basisstationsidentifizierer und Adressinformation assoziiert, und
in dem Schritt B die Netzvorrichtung (100) die Funkbasisstation (200, 201) über den Basisstationsidentifizierer, beinhaltet in dem Parametersatz, zugewiesen zu der Funkbasisstation (200, 201), benachrichtigt, wobei das Verfahren ferner die Schritte umfasst:
die Funkbasisstation (200, 201), Erlangen der Adressinformation, assoziiert mit dem Basisstationsidentifizierer, von einem vorbestimmten Server (20); und
die Funkbasisstation (200, 201), Senden einer Verbindungsanfrage, beinhaltend die erlangte Adressinformation, an die Netzvorrichtung (100), um den Parameterwert, assoziiert mit der Adressinformation, zu erlangen.

3. Verfahren des Einrichtens einer Funkbasisstation (200, 201) nach Anspruch 1, wobei
jeder der Parameterwerte mit dem mindestens einen Parameterwert mit einem Basisstationsidentifizierer assoziiert, wobei das Verfahren ferner die Schritte umfasst:
die Netzvorrichtung, Benachrichtigen der Funkbasisstation (200, 201) über den Basisstationsidentifizierer, beinhaltet in dem Parametersatz, zugewiesen zu der Funkbasisstation (200, 201), und
die Funkbasisstation (200, 201), Senden einer Verbindungsanfrage, beinhaltend den benachrichtigten Basisstationsidentifizierer, an die Netzvorrichtung (100), um den Parameterwert, assoziiert mit dem Basisstationsidentifizierer, zu erlangen.

4. Netzvorrichtung (100), verwendet in einem Funkbasisstationseinrichtungsverfahren zum Einrichten einer Funkbasisstation (200, 201) in einem Mobilkommunikationssystem, wobei die Vorrichtung (100) umfasst:
eine Verwaltungseinheit (102), konfiguriert zum Verwalten eines Parametersatzes, beinhaltend mindestens einen Parameterwert, bestimmt für jeden Gruppenbereich, welche Gruppenbereiche erlangt werden durch Teilen eines Abdeckungsbereichs; und
eine Zuweisungseinheit (104), konfiguriert zum Auswählen eines der Parametersätze für die Gruppenbereiche, jeweils beinhaltend einen Installationsort der Funkbasisstation (200, 201) und Zuweisen des ausgewählten Parametersatzes, wenn der Installationsort der Funkbasisstation (200, 201) bestimmt ist.

5. Netzvorrichtung (100) nach Anspruch 4, wobei die Verwaltungseinheit (102) den mindestens einen Parameterwert mit einem Basisstationsidentifizierer und Adressinformation in jedem der Parametersätze assoziiert, und
die Zuweisungseinheit (104) konfiguriert ist zum Benachrichtigen der Funkbasisstation (200, 201) über den Basisstationsidentifizierer, beinhaltet in dem Parametersatz, zugewiesen zu der Funkbasisstation (200, 201), wobei die Netzvorrichtung (100) ferner eine Verbindungsanfrageempfangseinheit (103) beinhaltet, welche konfiguriert ist zum Benachrichtigen der Funkbasisstation (200, 201) über den Parameterwert, assoziiert mit der Adressinformation, beinhaltet in einer Verbindungsanfrage, wenn die Verbindungsanfrage von der Funkbasisstation (200, 201) empfangen wird.

6. Netzvorrichtung (100) nach Anspruch 4, wobei die Verwaltungseinheit (102) mindestens einen Parameterwert mit einem Basisstationsidentifizierer in jedem der Parametersätze assoziiert, und die Zuweisungseinheit (104) konfiguriert ist zum Benachrichtigen der Funkbasisstation (200, 201) über den Basisstationsidentifizierer, beinhaltet in dem Parametersatz, zugewiesen zu der Funkbasisstation (200, 201), wobei die Vorrichtung (100) ferner eine Verbindungsanfrageempfangseinheit (103) umfasst, welche konfiguriert ist zum Benachrichtigen der Funkbasisstation (200, 201) über den Parameterwert, zugewiesen zu dem Basisstationsidentifizierer, beinhaltet in einer Verbindungsanfrage, wenn die Verbindungsanfrage von der Funkbasisstation (200, 201) empfangen wird.

## Revendications

1. Procédé d'installation de station radio de base pour installer une station radio de base (200, 201) dans un système de communication mobile, lequel procédé comprend :
une étape A dans laquelle un appareil de réseau (100) gère un ensemble de paramètres incluant au moins une valeur de paramètre déterminée pour chaque zone de groupe, lesquelles zones de groupe sont obtenues en divisant une zone de couverture ;
une étape B dans laquelle l'appareil de réseau (100) sélectionne l'un des ensembles de paramètres pour les zones de groupe, chacun incluant un emplacement d'installation de la station radio de base (200, 201), et attribue l'ensemble de paramètres sélectionné à la station radio de base (200, 201) lorsqu'un emplacement d'installation de la station radio de base (200, 201) est déterminé ; et
une étape C dans laquelle la station radio de base (200, 201) fonctionne en utilisant la valeur de paramètre incluse dans l'ensemble de paramètres attribué après avoir été connectée à l'appareil de réseau (100).

2. Procédé d'installation d'une station radio de base (200, 201) selon la revendication 1, dans lequel :
chacun des ensembles de paramètres associe l'au moins une valeur de paramètre à un identificateur de station de base et à une information d'adresse et
dans l'étape B, l'appareil de réseau (100) notifie à la station radio de base (200, 201) l'identificateur de station de base inclus dans l'ensemble de paramètres attribué à la station radio de base (200, 201),
lequel procédé comprend en outre les étapes suivantes :
la station radio de base (200, 201) acquiert l'information d'adresse associée à l'identificateur de station de base auprès d'un serveur prédéterminé (20) ; et
la station radio de base (200, 201) envoie une demande de connexion incluant l'information d'adresse acquise auprès de l'appareil de réseau (100) pour acquérir la valeur de paramètre associée à l'information d'adresse.

3. Procédé d'installation d'une station radio de base (200, 201) selon la revendication 1, dans lequel :
chacun des ensembles de paramètres associe l'au moins une valeur de paramètre à un identificateur de station de base,
lequel procédé comprend en outre les étapes suivantes :
l'appareil de réseau notifie à la station radio de base (200, 201) l'identificateur de station de base inclus dans l'ensemble de paramètres associé à la station radio de base (200, 201) et
la station radio de base (200, 201) envoie une demande de connexion incluant l'identificateur de station de base notifié à l'appareil de réseau (100) pour acquérir la valeur de paramètre associée à l'identificateur de station de base.

4. Appareil de réseau (100) utilisé dans un procédé d'installation de station de base destiné à installer une station radio de base (200, 201) dans un système de communication mobile, lequel appareil de réseau (100) comprend :
une unité de gestion (102) configurée pour gérer un ensemble de paramètres incluant au moins une valeur de paramètre déterminée pour chaque zone de groupe, lesquelles zones de groupe sont obtenues en divisant une zone de couverture ; et
une unité d'attribution (104) configurée pour sélectionner l'un des ensembles de paramètres pour les zones de groupe, chacun incluant un emplacement d'installation de la station radio de base (200, 201), et pour attribuer l'ensemble de paramètres sélectionné lorsque l'emplacement d'installation de la station radio de base (200, 201) est déterminé.

5. Appareil de réseau (100) selon la revendication 4, dans lequel :
l'unité de gestion (102) associe l'au moins une valeur de paramètre à un identificateur de station de base et à une information d'adresse dans chacun des ensembles de paramètres et
l'unité d'attribution (104) est configurée pour notifier à la station radio de base (200, 201) l'identificateur de station de base inclus dans l'ensemble de paramètres attribué à la station radio de base (200, 201),
lequel appareil de réseau (100) comprend en outre une unité de réception de demande de connexion (103) configurée pour notifier à la station radio de base (200, 201) la valeur de paramètre associée à l'information d'adresse incluse dans une demande de connexion lorsqu'elle reçoit la demande de connexion en provenance de la station radio de base (200, 201).

6. Appareil de réseau (100) selon la revendication 4, dans lequel :
l'unité de gestion (102) associe l'au moins une valeur de paramètre à un identificateur de station de base dans chacun des ensembles de paramètres et
l'unité d'attribution (104) est configurée pour notifier à la station radio de base (200, 201) l'identificateur de station de base inclus dans l'ensemble de paramètres attribué à la station radio de base (200, 201),
l'appareil de réseau (100) comprenant en outre une unité de réception de demande de connexion (103) configurée pour notifier à la station radio de base (200, 201) la valeur de paramètre associée à l'identificateur de station de base inclus dans une demande de connexion lorsqu'elle reçoit la demande de connexion en provenance de la station radio de base (200, 201).
